# EUROPEAN PATENT APPLICATION

(11) **EP 4 787 400 A1**
(43) Date of publication of application: **05.08.2026**
(21) Application number: 24872525.1
(22) Date of filing: 27.09.2024
(51) Int. Cl.: H01B 3/00, H01B 7/02, H01M 50/503, H01M 50/505, H01M 50/522, H01M 50/524, H01M 50/526

(54) **COMPOSITE MEMBER**

(30) Priority: 29.09.2023 JP 2023170683
(71) Applicant: IBIDEN CO., LTD., Ogaki-shi, Gifu 503-8604 (JP)
(72) Inventor: GOTO, Shinnosuke, Ibi-gun, Gifu 501-0695 (JP); USHIDA, Takeshi, Ibi-gun, Gifu 501-0695 (JP)
(74) Representative: Hoffmann Eitle
(86) International application number: PCT/JP2024/034703
(87) International publication number: WO 2025/070744

(57) **Abstract**

To provide a composite member that has excellent heat resistance and a particularly excellent insulating property, that does not require a winding operation such as that for a ceramic tape, that does not cause winding unevenness or a gap, that can easily cope with a complicated shape, and that can maintain an excellent insulating property and heat resistance even in the case of being heated at a high temperature. A composite member (1) includes a substrate (2) and an insulating film (3) covering at least a part of a surface of the substrate (2). The insulating film (3) is formed by alternately stacking a plurality of first films (11) and a plurality of second films (12) in this order from a substrate (2) side. The first film (11) contains a matrix (10) containing a compound having a siloxane bond and an inorganic material (20) dispersed in the matrix (10). The second film consists of a material of the matrix (10).

## Description

### TECHNICAL FIELD

The present invention relates to a composite member in which a substrate is covered with an insulating film.

### BACKGROUND ART

In order to electrically connect components, a conductive member in which an insulating film is formed on a surface of a metal piece is used. For example, various electronic devices, electric vehicles or hybrid vehicles driven by an electric motor, storage batteries, and the like are mounted with a power storage device in which a plurality of battery cells are connected in series or in parallel by a bus bar, which is a conductive member. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulating property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, an operation of winding the ceramic tape around the bus bar body is required. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, no sufficient insulating property and heat resistance can be obtained. It is also assumed that an adhesive surface of the ceramic tape is peeled off. Further, although a nylon tape is wound as an insulating layer on an outer side of the mica tape, the nylon tape has a problem in heat resistance, so that the nylon tape is damaged by heat and a desired insulating property cannot be maintained.

Therefore, an object of the present invention is to provide a composite member that has excellent heat resistance and a particularly excellent insulating property, that does not require a winding operation such as that for a ceramic tape, that does not cause winding unevenness or a gap, that can easily cope with a complicated shape, and that can maintain an excellent insulating property and heat resistance even in the case of being heated at a high temperature.

### SOLUTION TO PROBLEM

The above object of the present invention is achieved by the following configuration [1] relating to a composite member.
[1] A composite member including:
   a substrate; and
   an insulating film covering at least a part of a surface of the substrate, in which
   the insulating film includes a first film containing a matrix containing a compound having a siloxane bond and an inorganic material dispersed in the matrix, and a second film consisting of a material of the matrix, and
   a plurality of the first films and a plurality of the second films are alternately stacked in this order from a substrate side.
   In addition, preferred embodiments of the present invention relating to the composite member relate to the following [2] to [14].
[2] The composite member according to [1], in which the insulating film has a thickness of 150 µm or more.
[3] The composite member according to [1] or [2], wherein
   in a case where a cross section of the composite member in a direction parallel to a thickness of the insulating film is observed, in an arbitrarily selected range of the first film, a porosity P1 in a rectangular region R1 is 10% or less, the rectangular region R1 having a side of 50 µm in a thickness direction of the insulating film and a side of 300 µm in a direction orthogonal to the thickness direction.
[4] The composite member according to any one of [1] to [3], in which the second film is present on at least a part of a surface of the insulating film.
[5] The composite member according to [4], in which the second film present on at least a part of the surface of the insulating film has a thickness of 10 µm or more and 100 µm or less.
[6] The composite member according to any one of [1] to [5], in which a resin layer containing a resin different from the material of the matrix is provided on at least a part of the surface of the insulating film.
[7] The composite member according to [6], in which the resin layer has a thickness of 100 µm or more and 600 µm or less.
[8] The composite member according to any one of [1] to [7], in which the compound having the siloxane bond is at least one of silicone and silica sol.
[9] The composite member according to any one of [1] to [8], in which the inorganic material includes at least one kind selected from silica, alumina, mullite, and zirconia.
[10] The composite member according to any one of [1] to [8], in which the inorganic material includes at least one kind selected from a glass-based material, mica, kaolin, talc, clay, pyrophyllite, montmorillonite, bentonite, wollastonite, xonotlite, zeolite, diatomaceous earth, and halloysite.
[11] The composite member according to any one of [1] to [8], in which the inorganic material includes at least one kind selected from a flaky inorganic material, a fibrous inorganic material, and a particulate inorganic material.
[12] The composite member according to any one of [1] to [8], in which the inorganic material includes at least one of a flaky glass-based material and mica.
[13] The composite member according to any one of [1] to [12], in which the composite member is applied to a bus bar that connects a plurality of battery cells or battery modules.
[14] The composite member according to any one of [1] to [12], in which the composite member is applied to a connector, a protective component for a battery module, a case of an electronic component, a battery cell, a battery module, a battery pack, or a coil of a motor.

### ADVANTAGEOUS EFFECTS OF INVENTION

In the composite member according to the present invention, since the insulating film covering at least a part of the substrate includes the first film containing the matrix containing the compound having the siloxane bond and the inorganic material, excellent heat resistance and insulating property can be obtained. In addition, since the plurality of first films and the plurality of second films consisting of the material of the matrix are alternately stacked, the insulating property can be further improved, and even in the case of being heated at a high temperature, an excellent insulating property and heat resistance can be maintained.

### BRIEF DESCRIPTION OF DRAWINGS

[Fig. 1] Fig. 1 is a photograph substituted for a drawing showing a cross section of a composite member according to the present embodiment.
[Fig. 2] Fig. 2 is a perspective view showing a bus bar to which the composite member according to the present embodiment is applied.
[Fig. 3A] Fig. 3A is a diagram showing a method for producing a composite member according to the present embodiment in order of steps, and is a schematic diagram showing a state after a first coating material curing step for the first time.
[Fig. 3B] Fig. 3B is a diagram showing the method for producing a composite member according to the present embodiment in order of steps, and is a schematic diagram showing a state after an immersion step for the first time.
[Fig. 3C] Fig. 3C is a diagram showing the method for producing a composite member according to the present embodiment in order of steps, and is a schematic diagram showing a state after a first coating material curing step for the second time.
[Fig. 3D] Fig. 3D is a diagram showing the method for producing a composite member according to the present embodiment in order of steps, and is a schematic diagram showing a state after a resin layer forming step.

### DESCRIPTION OF EMBODIMENTS

The present inventors have conducted intensive studies to obtain a composite member capable of solving the above problems without using an insulating tape such as a ceramic tape. As a result, the present inventors have found that it is possible to easily cope with a complicated shape by applying a material of an insulating film to a surface of a substrate and forming the insulating film covering the surface of the substrate.

In addition, as a result of intensive studies to further improve an insulating property of the insulating film, the present inventors have found that it is effective to alternately stack a plurality of first films containing a matrix containing a compound having a siloxane bond and an inorganic material and a plurality of second films consisting of a material of the matrix.

Hereinafter, embodiments of the present invention will be described in detail with reference to the drawings. Note that, the present invention is not limited to the embodiments described below, and can be freely changed and implemented without departing from the gist of the present invention.

### [Composite Member]

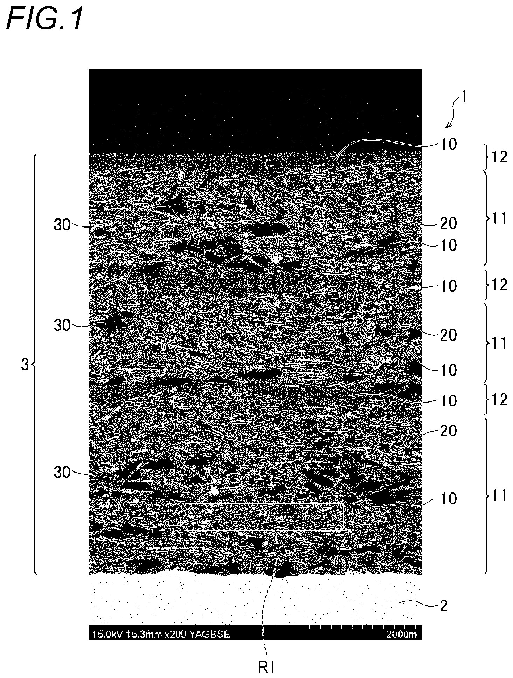

Fig. 1 is a photograph substituted for a drawing showing a cross section of a composite member according to the present embodiment. A composite member 1 includes a substrate 2 and an insulating film 3 covering at least a part of a surface of the substrate 2. The insulating film 3 is formed by alternately stacking a plurality of first films 11 and a plurality of second films 12 in order from a substrate 2 side. The first film 11 and the second film 12 constituting the insulating film 3 of the composite member 1 according to the present embodiment, the substrate 2, and the like will be described in detail below.

### <Insulating Film>

As shown in Fig. 1, in the insulating film 3 of the composite member 1 according to the present embodiment, three first films 11 and three second films 12 are alternately stacked from the substrate 2 side.

### (First Film)

The first film 11 contains a matrix 10 containing a compound having a siloxane bond and an inorganic material 20 dispersed in the matrix 10. Since both the compound having the siloxane bond and the inorganic material 20 are materials having excellent heat resistance and insulating property, when the compound having the siloxane bond and the inorganic material 20 are contained as components of the first film 11 constituting the insulating film 3, excellent heat resistance and insulating property can be obtained. In addition, a plurality of pores 30 are formed inside the first film 11.

Note that, examples of the compound having the siloxane bond (Si-O-Si bond) include silicone and silica sol (silica: SiO₂). From the viewpoint of excellent heat resistance and insulating property, the compound having the siloxane bond contained in the matrix 10 is preferably at least one of silicone and silica sol, and more preferably silicone. It is also preferable that the matrix 10 contains both silicone and silica sol.

### (Thickness of First Film)

A thickness of each of the first films 11 is not particularly limited, and as shown in production steps to be described later, the thickness is preferably a thickness that can be easily formed by coating once when a surface of the substrate is coated with a coating liquid. The thickness of the first film 11 is, for example, preferably 50 µm or more, and more preferably 100 µm or more. On the other hand, when the thickness of the first film 11 is too large, in a step of forming the second film 12, it is difficult to fill some of the pores formed during the production steps with the second film 12, and a porosity to be described later may increase. Therefore, the thickness of the first film 11 is preferably 400 µm or less, and more preferably 300 µm or less.

### (Porosity of First Film)

As shown in Fig. 1, the pores 30 are formed in the first film 11, and depending on a method for producing the insulating film 3, a large number of pores 30 may be generated inside the first film 11, and a strength of the insulating film 3 may decrease. In the present embodiment, in the case where a cross section of the composite member 1 in a direction parallel to the thickness of the insulating film 3 is observed, a porosity in an arbitrarily selected region R1 of the first film 11 is preferably controlled. Note that, the region R1 represents a rectangular region having a side of 50 µm in a thickness direction and a side of 300 µm in a direction orthogonal to the thickness direction in an arbitrarily selected region in the first film 11. When a porosity P1 in the region R1 is 10% or less, the number of the pores 30 is reduced as a whole in the insulating film 3. As a result, a space between the inorganic materials 20 in the first film 11 is almost filled with the matrix 10, and the first film 11 has a dense structure, so that the strength of the entire insulating film 3 can be sufficiently obtained. Therefore, the porosity P1 is preferably 10% or less, more preferably 8% or less, and still more preferably 6% or less.

In the present embodiment, the porosity P1 is calculated according to the following method. First, in the composite member 1 on which the insulating film 3 has been formed, a micrograph of a cross section in the direction parallel to the thickness direction is taken. Next, the region R1 is arbitrarily selected from the obtained photograph, the pores 30 present in the region R1 are extracted, and a total area of the pores 30 in the region R1 is calculated. Thereafter, the porosity P1 in the region R1 can be calculated by dividing the total area of the pores 30 by an area of the region R1. The porosity P1 is preferably obtained by collecting the regions R1 from three points within the above range and calculating an average of the obtained porosities, and more preferably obtained by calculating an average of porosities obtained from five points within the above range.

### (Second Film)

Unlike the first film 11, the second film 12 does not contain the inorganic material 20, and consists of a material of the matrix 10. Therefore, high adhesion is obtained between the first film 11 and the second film 12. In addition, since the second film 12 is a hard and dense layer and the material of the matrix containing a compound having a siloxane bond has an excellent insulating property, the insulating property can be further improved by stacking a plurality of second films 12. In addition, in the present embodiment, the second film 12 is preferably present on at least a part of a surface of the insulating film 3. When the second film 12 is present on the surface of the insulating film 3, it is possible to suppress damage to a surface of the composite member 1 and to alleviate an impact from a collision object. In addition, since the second film 12 is present on the surface of the insulating film 3, an effect of preventing the inorganic material 20 or the like contained in the first film 11 from falling off can be obtained.

### (Thickness of Second Film)

When the thickness of the second film 12 present on the surface of the insulating film 3 is 10 µm or more, an effect of protecting the composite member 1 by the second film 12 and the effect of preventing the inorganic material 20 or the like in the first film 11 from falling off can be obtained. Therefore, the thickness of each of the second films 12 is preferably 10 µm or more. In addition, when the thickness of the second film 12 is 100 µm or less, the occurrence of peeling off can be suppressed. Therefore, the thickness of the second film 12 is preferably 100 µm or less. Note that, when the thickness of the second film excluding the surface among the plurality of stacked layers is 10 µm or more, an effect of improving the insulating property can be sufficiently obtained, and when the thickness is 100 µm or less, the occurrence of peeling off can be suppressed. Therefore, the thickness of the second film excluding the surface is preferably 10 µm or more. In addition, the thickness of the second film excluding the surface is preferably 100 µm or less.

### (Thickness of Insulating Film)

When the thickness of the insulating film 3 is less than 150 µm, the strength of the insulating film 3 is insufficient, peeling off may occur, and it is difficult to ensure the insulating property. Therefore, the thickness of the insulating film 3 is 150 µm or more, and preferably 200 µm or more. On the other hand, as the thickness of the insulating film 3 having a porosity to be described later increases, the strength of the insulating film 3 is improved, and thus the upper limit of the thickness is not particularly limited, but when the thickness is excessively increased, it is difficult to control a size of the composite member 1, and a production cost also increases. In addition, peeling off easily occurs. Therefore, the thickness of the insulating film 3 is preferably 800 µm or less, and more preferably 600 µm or less.

In the composite member 1 configured as described above, the insulating property is not imparted by winding a tape around the substrate 2, but the surface of the substrate 2 is covered with the material of the insulating film to form the insulating film 3 in close contact with the substrate 2. Therefore, during the production of the composite member 1 according to the present embodiment, a winding operation is not required, there is no problems with winding unevenness, a gap, or peeling off, and it is possible to easily cope with even a complicated shape. In addition, since the first film 11 constituting the insulating film 3 contains the inorganic material 20 and the matrix 10 containing a compound having a siloxane bond (Si-O-Si bond) such as silicone or silica sol (silica: SiO₂), even in the case where the composite member 1 is exposed to a high temperature, deterioration is less likely to occur, and excellent heat resistance and insulating property can be maintained. Further, since the second film 12 having a dense structure composed of the material of the matrix 10 is repeatedly stacked, a more excellent insulating property can be obtained.

Hereinafter, in the composite member 1 according to the present embodiment, the materials contained in the first film 11 and the second film 12 constituting the insulating film 3 will be described in more detail.

### (Compound Having Siloxane Bond: Silicone)

Silicone, which is a preferred example of the compound having the siloxane bond contained in the matrix 10 of the insulating film 3, is heated in a coating material curing step in a production method to be described later, whereby functional groups disappear and a SiO bond is generated. In addition, when a flame or the like is generated near the composite member and the insulating film is heated to a temperature of, for example, 700°C or higher, SiO₂ is generated by thermal decomposition. Then, since SiO₂ is not burned out even when subjected to a flame, the insulating film 3 containing silicone can have excellent heat resistance. That is, even in the case where the composite member 1 according to the present embodiment is heated at a high temperature, the insulating film 3 is in close contact with the substrate 2 without peeling off, and an excellent insulating property and heat resistance can be maintained. Note that, the silicone may be either a silicone resin or a silicone rubber, and it is preferable to select a silicone resin from the viewpoint of increasing a density of SiO₂ to be formed.

### (Inorganic Material)

Since the inorganic material 20 has a high melting point and excellent heat resistance, the heat resistance of the entire insulating film 3 can be improved by containing the inorganic material 20 in the first film 11 constituting the insulating film 3. In addition, since the inorganic material 20 can also act as a framework in the first film 11, the strength of the insulating film 3 can be improved.

The inorganic material 20 preferably contains a silicate compound. As described above, silicone, which is an example of the compound having the siloxane bond, can be changed into SiO₂ by thermal decomposition, but since the silicate compound has the same component as SiO₂ formed by silicone, a bonding force between the matrix 10 containing silicone and the inorganic material 20 can be improved. Note that, the silicate compound preferably includes at least one kind selected from a glass-based material, mica, kaolin, talc, clay, pyrophyllite, montmorillonite, bentonite, wollastonite, xonotlite, zeolite, diatomaceous earth, and halloysite.

Note that, since a main component of silica sol (silica), which is another preferred example of the compound having the siloxane bond, is SiO₂ and the silicate compound has the same component as the silica sol (SiO₂), the bonding force between the matrix 10 containing the silica sol (silica) and the inorganic material 20 can also be improved.

In addition, the inorganic material 20 also preferably includes at least one kind selected from silica, alumina, mullite, and zirconia. Since the above material has a high melting point and a high insulating property, the heat resistance and the insulating property of the entire insulating film 3 can be further improved by containing these materials in the first film 11. Note that, in the case of applying a bus bar as an example of the composite member according to the present invention, a heat exposure temperature assumed for the bus bar is equal to or higher than a melting point of a metal material used for a general bus bar body. In the present embodiment, when silica, alumina, mullite, zirconia, or the like is contained as the inorganic material 20, since these materials have a melting point equal to or higher than the thermal exposure temperature, it is possible to suppress the bus bar body from being exposed to high heat. Therefore, the above materials are suitably used as the material of the insulating film 3 in the bus bar.

The inorganic material 20 preferably has at least one shape selected from a flaky shape, a fibrous shape, and a particulate shape. When the inorganic material 20 has the shape as described above, an adhesion force between the inorganic material 20 and the matrix 10 is increased when the inorganic material 20 is dispersed in the matrix 10, and the strength of the insulating film 3 can be improved.

In the case of containing a glass-based material as the inorganic material 20, the glass-based material is preferably at least one kind selected from a flaky glass-based material, a glass particle, and a glass fiber. Among these, the flaky glass-based material is oriented in a planar shape inside the insulating film 3 and exhibits an excellent insulating property and heat resistance. Therefore, it is particularly preferable to contain a flaky glass-based material as the glass-based material. In addition, the mica described above is particularly preferably used as the inorganic material 20 for the same reason as the flaky glass-based material.

A content of the inorganic material 20 with respect to all components in the first film 11 is preferably 3 vol% to 70 vol%, more preferably 10 vol% to 50 vol%, and still more preferably 20 vol% to 40 vol%. When the content of the inorganic material 20 is less than 3 vol%, the insulating property and the heat resistance may not be sufficiently obtained. On the other hand, when it is more than 70 vol%, a viscosity of a coating liquid to be subjected to dip coating is too high and a film forming property is poor.

The content of the inorganic material 20 in the first film 11 can be measured by, for example, a method same as the method for measuring the porosity. That is, a cross section of the composite member 1 in the direction parallel to the thickness direction of the insulating film 3 is taken using an electron microscope, a predetermined region is selected from the obtained photograph, and a portion that can be determined as an inorganic material in this region is colored. Thereafter, a total area of the colored portion (inorganic material) can be divided by an area of the selected region, to calculate the content (vol%) of the inorganic material 20. The larger the size of the region to be measured is, the smaller the error is. For example, similar to the measurement region of the porosity, a rectangular region having a side of 50 µm in the thickness direction and a side of 300 µm in the direction orthogonal to the thickness direction can be selected in the first film 11. The content of the inorganic material 20 in the first film 11 is preferably obtained by collecting regions having the above size from three different points in the first film 11 and calculating an average of the obtained contents, and more preferably obtained by calculating an average of contents obtained from five different points.

Note that, in addition to the matrix 10 and the inorganic material 20 described above, the first film 11 constituting the insulating film 3 may contain other materials such as a flame retardant, a dispersant, and a pigment as long as the insulating property and the heat resistance are not influenced. In addition, as to be described later, the first film 11 is formed by applying a coating material (coating liquid), which is a material of the first film, to the surface of the substrate and it is preferable to contain a thixotropic agent in order to improve a coating performance of the coating liquid containing the material of the matrix 10 and the inorganic material 20.

Similar to the first film 11, the second film 12 may also contain other materials such as a flame retardant, a dispersant, and a pigment as long as the insulating property and the heat resistance are not influenced.

### <Resin Layer>

The composite member 1 may include a resin layer (not shown) containing a resin different from the material of the matrix on at least a part of the surface. As a material of the resin layer, an insulating resin can be used, and examples thereof include an epoxy resin, a nylon resin, a styrene-butadiene rubber (SBR), and a silicone rubber. When the composite member 1 includes the resin layer, the insulating property and the heat resistance can be further improved.

### (Thickness of Resin Layer)

In the case where the composite member 1 includes the resin layer, when a thickness of the resin layer is 100 µm or more, the effect of improving the insulating property and the heat resistance can be sufficiently obtained. Therefore, the thickness of the resin layer is preferably 100 µm or more, more preferably 120 µm or more, and still more preferably 150 µm or more. In addition, when the thickness of the resin layer is 600 µm or less, the size of the composite member 1 is not influenced, and an increase in production cost can be suppressed. Therefore, the thickness of the resin layer is preferably 600 µm or less, more preferably 550 µm or less, and still more preferably 500 µm or less.

### <Substrate>

In the present embodiment, the substrate 2 is not particularly limited, and body portions of various products to which the composite member 1 according to the present embodiment is applied can be used as the substrate 2. For example, in the case of applying a bus bar to be described later as the composite member 1, a bus bar body having conductivity can be used as the substrate 2. Note that, although the bus bar body has conductivity and the substrate itself is energized, in the present embodiment, the substrate 2 covered with the insulating film 3 is not limited to a conductive one. For example, a substrate composed of a non-energized material can also be used.

### [Specific Application Example of Composite Member]

A product to which the composite member 1 is applied is not particularly limited, and the composite member 1 can be applied to, for example, a bus bar used for connecting a plurality of battery cells or battery modules in a power storage device. Hereinafter, a configuration of the composite member 1 will be described using a bus bar as an example.

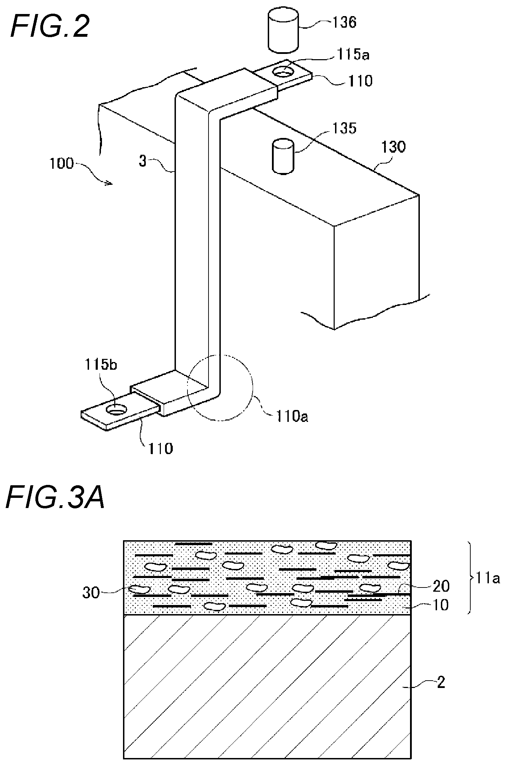

Fig. 2 is a perspective view showing a bus bar to which the composite member according to the present embodiment is applied. Note that, Fig. 2 shows a state immediately before a bus bar (composite member) 100 is attached to a battery cell 130. A bus bar body (substrate) 110 is, for example, a metal plate member having a Z shape as a whole, and is fixed by inserting an electrode 135 of the battery cell 130 into a connection hole 115a at one tip and covering the electrode 135 with a terminal cap 136. Adjacent battery cells (not shown) or external devices (not shown) are connected to a connection hole 115b at the other tip of the bus bar body 110. A region of the bus bar body 110 excluding the connection holes 115a and 115b is covered with the insulating film 3. In this manner, the bus bar 100 is formed.

Note that, although not shown, the bus bar body 110 may have various shapes depending on an installation location of the battery cell 130, such as an I-shape as a whole or an irregular shape having a curved portion.

When the bus bar body 110 has a shape having a bent portion 110a or a curved portion (not shown) such as a Z shape shown in the drawing, the following problems occur. For example, in the method of winding the ceramic tape around the body as in the bus bar disclosed in Patent Literature 1, it takes time and effort to perform the winding operation in order to prevent winding unevenness or a gap from occurring in the bent portion 110a or the curved portion. It is also assumed that a gap is generated between the ceramic tapes due to vibration or the like, or an adhesive between the ceramic tape and the body is peeled off.

In contrast, in the bus bar 100 configured as described above, the insulating property is not imparted by winding a tape around the bus bar body 110, but a surface of the bus bar body 110 is alternately covered with the material of the first film 11 (first coating material) and the material of the second film 12 (second coating material) forming the insulating film 3 a plurality of times to form the insulating film 3 in close contact with the bus bar body 110. Therefore, during the production of the bus bar 100, a winding operation is not required, there is no problems with winding unevenness, a gap, or peeling off, and it is possible to easily cope with even a complicated shape.

Note that, as a method of covering the surface of the bus bar body 110 with the coating material for the first film 11, "dip coating" in which the bus bar body 110 is immersed in a coating liquid or coating using a brush or a spray can be used. In the case of using dip coating, since the insulating film 3 is not formed in the connection hole 115a and the connection hole 115b, this region is masked and then the bus bar body 110 is immersed in the coating liquid. In addition, as a method of covering a surface of the first film 11 with a coating liquid for the second film 12, it is preferable that the bus bar body 110 on which the first film 11 has been formed is immersed in the coating liquid for the second film 12 after masking the region where the insulating film 3 is not formed. By repeating such a step a plurality of times, the insulating film 3 covering at least a part of the surface of the bus bar body 110 can be formed.

In addition to the bus bar, the composite member according to the present embodiment can be applied to a connector, a protective component for a battery module, a case of an electronic component, a battery cell, a battery module, a battery pack, or a coil of a motor.

### [Method for Producing Composite Member]

The composite member according to the present embodiment can be produced, for example, by the following production method. Figs. 3A to 3D are schematic diagrams showing a method for producing a composite member according to the present embodiment in order of steps. In Figs. 3A to 3D, the same components as those shown in Fig. 1 are denoted by the same reference numerals, and detailed description thereof will be omitted or simplified. However, in Figs. 3A to 3D, for ease of description, the first layer of first film and the third layer of first film are distinguished from each other by reference numerals by counting in the order of stacking from the substrate 2. In addition, the second layer of second film and the fourth layer of second film are distinguished from each other by reference numerals. Note that, in the following production method, a case where the compound having the siloxane bond contained in the matrix 10 is silicone will be described, and a case where the compound having the siloxane bond is silica sol (silica) can be similarly applied.

### <Formation of First Layer>

### (Application Step: First Time)

As shown in Fig. 3A, first, at least a part of the surface of the substrate 2 is coated with a material for a first film 11a (first coating material). The first coating material is, for example, obtained by adding the material of the matrix 10 containing silicone and the inorganic material 20 to an organic solvent.

### (First Coating Material Drying Step: First Time)

After the application step, the first coating material is dried at a temperature of 50°C, for example. In the first coating material drying step, the organic solvent is volatilized.

### (First Coating Material Curing Step: First Time)

Thereafter, the dried first coating material is heated at a temperature of, for example, 200°C to be cured. With the first coating material curing step, the silicone is dehydrated and condensed to form the first film 11a having a three-dimensional network structure. At this time, a large number of pores 30 are formed in the first film 11a.

### <Formation of Second Layer>

### (Immersion Step: First Time)

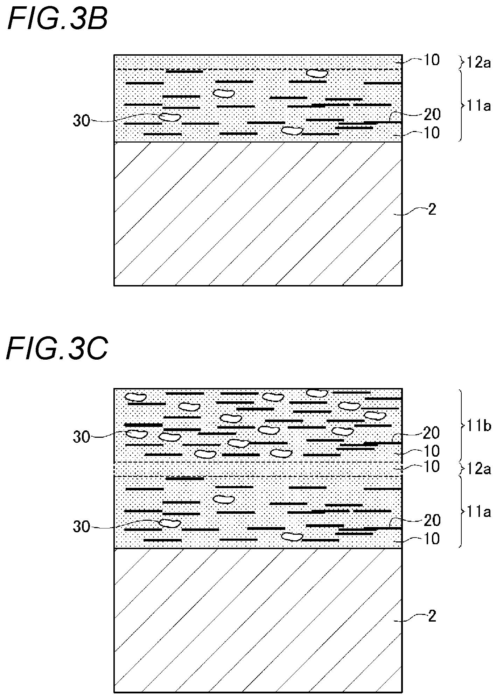

Thereafter, the substrate 2 on which the first film 11a has been formed is immersed in a material for a second film 12a (second coating material). The second coating material does not contain the inorganic material 20 and is obtained by adding the material of the matrix 10 containing silicone to an organic solvent. As shown in Fig. 3B, with the immersion step, some of the large number of pores 30 formed in the first film 11a is filled with the second coating material, and a porosity of the first film 11a is reduced. In addition, the excess second coating material that has not been absorbed by the pores 30 remains on a surface of the first film 11a. Thereafter, the second coating material is dried at a temperature of, for example, 50°C and then heated at a temperature of, for example, 200°C to be cured. Accordingly, the second film 12a consisting of the material of the matrix 10 containing silicone is formed on the surface of the first film 11a.

### <Formation of Third Layer>

### (Application Step: Second Time)

Thereafter, as shown in Fig. 3C, the first coating material is stacked again on a surface of the second film 12a. This first coating material is the same material as that used in the application step for the first time.

### (First Coating Material Drying Step: Second Time)

After the application step for the second time, the first coating material is dried at a temperature of 50°C, for example. With the first coating material drying step for the second time, the organic solvent in the applied first coating material in the application step for the second time is volatilized.

### (First Coating Material Curing Step: Second Time)

Thereafter, the dried first coating material is heated at a temperature of, for example, 200°C to be cured. With the first coating material curing step for the second time, the silicone is dehydrated and condensed to stack a first film 11b having a three-dimensional network structure. At this time, a large number of pores 30 are formed in the first film 11b.

### <Formation of Fourth Layer>

### (Immersion Step: Second Time)

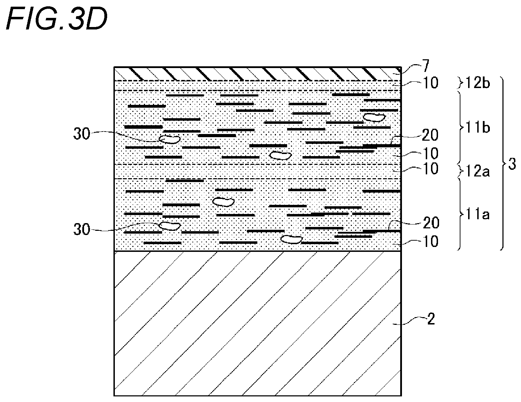

Thereafter, as shown in Fig. 3D, the substrate 2 on which the first film 11b has been formed is immersed in the second coating material. The second coating material is the same material as that used in the immersion step for the first time. With the immersion step for the second time, some of the large number of pores 30 formed in the first film 11b is filled with the second coating material, and a porosity of the first film 11b is reduced. In addition, the second coating material that has not been absorbed by the pores 30 remains on a surface of the first film 11b. Thereafter, the second coating material is dried at a temperature of, for example, 50°C and then heated at a temperature of, for example, 200°C to be cured. Accordingly, a second film 12b consisting of the material of the matrix 10 containing silicone is formed on the surface of the first film 11b.

Note that, an immersion time in the immersion step for the first time and the immersion step for the second time is not particularly limited, and the immersion time may be selected such that the excess second coating material remains on the surfaces of the first films 11a and 11b and the second films 12a and 12b are formed. The obtained second films 12a and 12b are formed from the second coating material remaining on the surface, and thus have a dense structure not containing the inorganic material 20.

### (Resin Layer Forming Step)

Thereafter, on the second film 12b, for example, an epoxy resin coating material is applied by electrostatic powder coating or fluid immersion coating to form a resin layer 7. In the case of forming the resin layer 7, a part of the material constituting the resin layer 7 may penetrate the layers below the resin layer 7.

As described above, the second coating material used in the immersion step does not contain the inorganic material 20 in the first coating material used in the immersion step. In addition, since the material of the matrix 10 is silicone, when the second coating material contains silicone, the amount of silicone is increased and the amount of SiO₂ also increases, and the insulating film 3 is more effectively maintained even in the case of receiving a flame.

Note that, in the above production method, the series of steps from the application step to the immersion step is repeated twice, but may be repeated a plurality of times until a desired thickness is obtained. Even in the case where the series of steps is repeated three times or more, since the immersion step of immersion in the second coating material is included after the first film is formed, the first film and the second film are repeatedly stacked, and the insulating film 3 having a high insulating property can be formed.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-170683) filed on September 29, 2023, and the contents thereof are incorporated herein by reference.

### REFERENCE SIGNS LIST

1 composite member
2 substrate
3 insulating film
7 resin layer
10 matrix
11, 11a, 11b first film
12, 12a, 12b second film
20 inorganic material
30 pore
100 bus bar
110 bus bar body
115a, 115b connection hole
130 battery cell
135 electrode
136 terminal cap

## Claims

1. A composite member comprising:
a substrate; and
an insulating film covering at least a part of a surface of the substrate, wherein
the insulating film includes a first film containing a matrix containing a compound having a siloxane bond and an inorganic material dispersed in the matrix, and a second film consisting of a material of the matrix, and
a plurality of the first films and a plurality of the second films are alternately stacked in this order from a substrate side.

2. The composite member according to claim 1, wherein the insulating film has a thickness of 150 µm or more.

3. The composite member according to claim 1, wherein
in a case where a cross section of the composite member in a direction parallel to a thickness of the insulating film is observed, in an arbitrarily selected range of the first film, a porosity P1 in a rectangular region R1 is 10% or less, the rectangular region R1 having a side of 50 µm in a thickness direction of the insulating film and a side of 300 µm in a direction orthogonal to the thickness direction.

4. The composite member according to claim 1, wherein the second film is present on at least a part of a surface of the insulating film.

5. The composite member according to claim 4, wherein the second film present on at least the part of the surface of the insulating film has a thickness of 10 µm or more and 100 µm or less.

6. The composite member according to any one of claims 1 to 5, wherein a resin layer containing a resin different from the material of the matrix is provided on at least a part of the surface of the insulating film.

7. The composite member according to claim 6, wherein the resin layer has a thickness of 100 µm or more and 600 µm or less.

8. The composite member according to any one of claims 1 to 5, wherein the compound having the siloxane bond is at least one of silicone and silica sol.

9. The composite member according to any one of claims 1 to 5, wherein the inorganic material includes at least one kind selected from silica, alumina, mullite, and zirconia.

10. The composite member according to any one of claims 1 to 5, wherein the inorganic material includes at least one kind selected from a glass-based material, mica, kaolin, talc, clay, pyrophyllite, montmorillonite, bentonite, wollastonite, xonotlite, zeolite, diatomaceous earth, and halloysite.

11. The composite member according to any one of claims 1 to 5, wherein the inorganic material includes at least one kind selected from a flaky inorganic material, a fibrous inorganic material, and a particulate inorganic material.

12. The composite member according to any one of claims 1 to 5, wherein the inorganic material includes at least one of a flaky glass-based material and mica.

13. The composite member according to any one of claims 1 to 5, wherein the composite member is applied to a bus bar that connects a plurality of battery cells or battery modules.

14. The composite member according to any one of claims 1 to 5, wherein the composite member is applied to a connector, a protective component for a battery module, a case of an electronic component, a battery cell, a battery module, a battery pack, or a coil of a motor.
